# FASCICULE DE BREVET EUROPEEN

(11) **EP 1 701 846 B1**
(45) Date de publication et mention de la délivrance du brevet: **13.10.2010**
(21) Numéro de dépôt: 05717372.6
(22) Date de dépôt: 06.01.2005
(51) Int. Cl.: B32B 27/10, B32B 3/10, B42D 15/00

(54) **SUPPORT D INFORMATIONS EN FEUILLE DU TYPE IMPRIMABLE**
FLÄCHENFÖRMIGER TRÄGER FÜR AUFDRUCKBARE INFORMATIONEN
PRINTABLE-TYPE INFORMATION SUPPORT SHEET

(30) Priorité: 08.01.2004 FR 0400136
(43) Date de publication de la demande: 20.09.2006
(73) Titulaire: Label Print, 91580 Etrechy (FR)
(72) Inventeur: MOULIN, Patrice, F-75016 Paris (FR)
(74) Mandataire: Ramey, Daniel
(86) Numéro de dépôt international: PCT/FR2005/000024
(87) Numéro de publication internationale: WO 2005/072960

(56) Documents cités:
- WO-A-03/020597
- FR-A- 2 727 057
- US-A- 5 001 106
- US-A- 5 914 165

## Description

L'invention concerne un support d'informations en feuille du type imprimable.

On connaît déjà des supports imprimables formés d'une feuille de matière imprimable telle notamment qu'une feuille de papier photographique utilisable sur une imprimante laser ou à jet d'encre, et dont le dos ou la face inférieure est revêtue d'un film de polyéthylène ou d'un polymère analogue.

La demande WO03/020597 décrit un support imprimable de ce type, dans lequel le polymère appliqué au dos de la feuille de papier photographique a une résistance à la rupture et un allongement à la rupture ayant des valeurs telles que ce polymère casse plus ou moins franchement par pliage le long d'une ligne d'affaiblissement formée dans la feuille de papier photographique, le pliage étant réalisé du côté de la feuille de papier photographique pour mettre le polymère en traction et provoquer sa rupture par allongement.

Dans ce document antérieur, le polymère est un polyméthylpentène, un polypropylène, un polyéthylène ou un polyméthacrylate de méthyle.

Bien que ces supports connus soient d'une utilisation simple et permettent d'imprimer par exemple des cartes de visite sur une feuille de format A4 au moyen d'une imprimante laser ou à jet d'encre et de séparer ensuite facilement les cartes les unes des autres par simple pliage du support sans utiliser d'outils de coupe, les bords de ces cartes ne sont pas parfaitement nets et la tenue (la « main ») de ces cartes est inférieure à celle des cartes de visite classiques. De même, les photographies imprimées sur ces supports connus n'ont pas la même tenue que les photographies classiques du type « argentique ».

La présente invention a notamment pour but de supprimer ces inconvénients dans un support d'informations du type feuille imprimable.

Elle propose à cet effet un support d'informations comprenant une couche mince inférieure d'acétate de cellulose appliquée sur une face d'un produit laminé comprenant au moins une feuille de papier bristol et une feuille supérieure de papier photographique utilisable sur imprimante laser ou à jet d'encre, et des lignes d'affaiblissement formées au moins dans toute l'épaisseur du produit laminé.

Un tel support imprimable sur une imprimante laser ou à jet d'encre a la même tenue ou la même main qu'une carte de visite ou une photographie d'un type classique.

Dans un mode de réalisation préféré de l'invention, la feuille de papier bristol a un grammage compris par exemple entre 90 et 250 grammes par mètre carré.

La feuille supérieure de papier photographique a un grammage compris entre 85 et 110 grammes par mètre carré environ.

La couche mince inférieure d'acétate de cellulose a pour avantage essentiel de se rompre selon des lignes particulièrement nettes et exemptes de défauts visibles quand le support d'informations est plié le long d'une ligne d'affaiblissement du côté de la couche de matière imprimable ou photosensible. En particulier, la rupture par allongement de la couche mince d'acétate de cellulose se produit pour un angle de pliage relativement faible, qui peut être d'environ 45 degrés dans certaines réalisations.

Avantageusement, cette couche mince inférieure est formée par un film d'acétate de cellulose ayant une épaisseur qui est typiquement de l'ordre de 30 µm et qui peut de façon plus générale être comprise entre 15 et 50 µm environ, et qui est fixé par collage sur la couche de matériau support, la colle utilisée étant de préférence une colle du type « hot melt » thermofusible.

De même, la couche de matière imprimable formant la face supérieure du support selon l'invention est collée sur la couche de matériau support au moyen d'une colle du même type qu'indiqué ci-dessus.

Selon une autre caractéristique de l'invention, les lignes d'affaiblissement précitées comprennent des lignes de coupe formées uniquement dans la couche supérieure et la feuille de papier bristol et des lignes de coupe formées à travers la couche supérieure, la feuille de papier bristol et la couche mince inférieure.

Ces lignes d'affaiblissement peuvent comprendre également des lignes formées de perforations successives s'étendant à travers la couche supérieure, la feuille de papier bristol et la couche mince inférieure et constituant des lignes de pliage ou de rupture.

Selon une autre caractéristique particulièrement avantageuse de l'invention, les lignes d'affaiblissement précitées délimitent dans le support d'informations au moins une zone destinée à recevoir une information et/ou une image imprimée et comprennent des lignes de coupe permettant de séparer cette zone du reste du support et/ou des lignes de pliage ou de rupture rattachant cette zone à d'autres parties du support qui, après pliage le long des lignes précitées, forment un présentoir de cette zone.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique agrandie en coupe d'une partie d'un support selon l'invention ;
- la figure 2 est une vue schématique de face d'un exemple de réalisation d'un support selon l'invention ;
- la figure 3 est une vue schématique de face d'un autre exemple de support selon l'invention ;
- la figure 4 est une vue schématique de dessus du support de la figure 3 après découpe et pliage ;
- les figures 5 et 6 sont des vues schématiques, de face et en coupe selon la ligne VI-VI de la figure 5 respectivement, d'une variante de réalisation de l'invention.

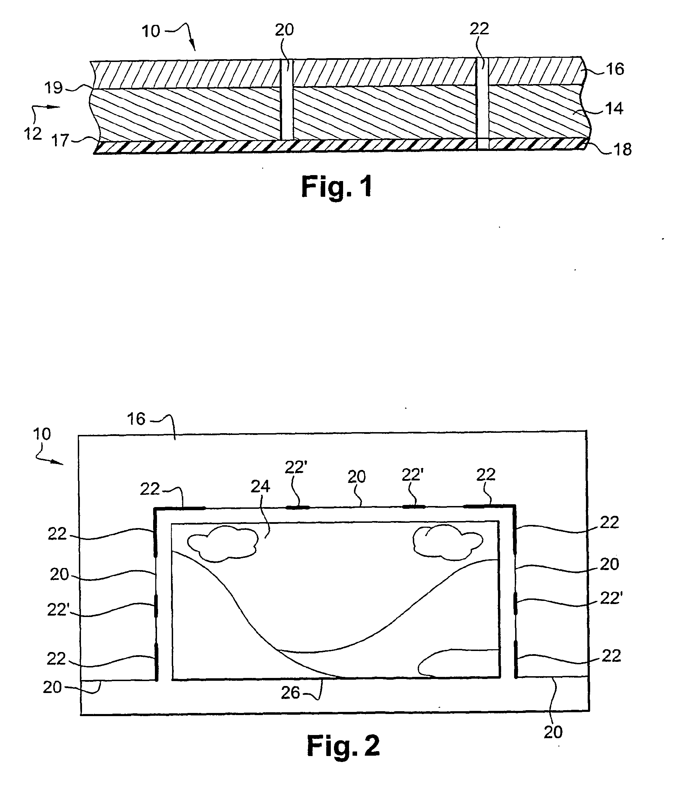

Le support d'informations selon l'invention se présente typiquement sous forme d'une feuille 10 de papier épais, ayant une bonne tenue et une bonne main et qui comprend, dans l'exemple de réalisation de la figure 1, un produit laminé 12 formé d'une couche 14 de matériau support telle qu'une feuille de papier bristol, et d'une couche supérieure 16 de matière imprimable ou photosensible, telle qu'une feuille de papier photographique utilisable sur des imprimantes laser ou à jet d'encre.

Typiquement, la couche 14 de matériau support a un grammage compris entre 90 et 250 grammes par mètre carré environ, et la couche 16 de matière imprimable ou photosensible a un grammage de l'ordre de 85 à 110 grammes par mètre carré.

Le produit laminé 12 comporte sur sa face inférieure une couche mince 18 d'un polymère fragile et cassant tel que de préférence de l'acétate de cellulose, ayant une épaisseur qui est ici de l'ordre de 30 µm environ et qui est de préférence comprise entre 15 et 50 µm.

Les trois couches 14, 16 et 18 sont fixées par collage, de préférence au moyen d'une colle du type « hot melt » qui est thermofusible. Lors de la fabrication, la couche 14 de matériau support, telle qu'une feuille de papier bristol, et le film 18 d'acétate de cellulose sont collés l'un à l'autre par une couche mince de colle 17, puis la feuille de papier photographique formant la couche supérieure 16 est collée sur la feuille 14 de papier bristol par une couche mince 19 de colle.

Dans la pratique, la feuille de papier bristol 14, le film 18 d'acétate de cellulose et la feuille 16 de papier photographique sont fournis sous forme de bobines que l'on déroule et que l'on fait passer entre des cylindres qui assurent le collage et le refroidissement du papier et du film précité.

Des lignes d'affaiblissement sont formées dans le support selon l'invention par des lignes de coupe ou de pré-découpe qui s'étendent à travers toute l'épaisseur du produit laminé 12 et, selon les cas, également à travers l'épaisseur du film 18 d'acétate de cellulose.

Ces lignes d'affaiblissement représentées en 20 et 22 respectivement en figure 1, peuvent être continues ou discontinues, elles peuvent être formées par des traits de coupe ou par des séries de perforations selon leur destination, et elles peuvent servir à la rupture du film 18 d'acétate de cellulose ou à son pliage, comme cela va être expliqué plus en détail ci-dessous.

Dans l'exemple de réalisation de la figure 2, le support d'informations 10 selon l'invention comporte une zone 24 destinée à recevoir une information imprimée telle qu'une image par exemple, qui est délimitée par des lignes d'affaiblissement 20 et 22 du type précité, ces lignes formant un U renversé autour de trois côtés de la zone 24 et étant reliées par des lignes d'affaiblissement 20 aux bords latéraux du support 10 au voisinage de la base ou du bord inférieur 26 de la zone 24.

Les lignes d'affaiblissement formées le long des angles de la zone 24 et qui servent à séparer cette zone du reste du support 10, sont des lignes 22 qui s'étendent à travers toute l'épaisseur du support 10, y compris à travers le film 18 d'acétate de cellulose. On évite ainsi de plier de façon visible la feuille supérieure 16 de papier photographique dans le prolongement de ces lignes d'affaiblissement.

Ces lignes de coupe 22 sont reliées à des lignes 20 traversant l'épaisseur du produit laminé 12 et ne traversant pas le film 18 d'acétate de cellulose.

De préférence, ces lignes 20 comprennent de place en place des points de coupe 22' qui traversent toute l'épaisseur du support 10 comme les lignes 22, ces points de coupe 22' ayant par exemple une longueur de 2 mm et formant des « tirets » dans les lignes 20.

Dans l'exemple de la figure 2, la ligne horizontale supérieure 20 comprend deux points de coupe 22' et les lignes verticales latérales comprennent chacune un point de coupe 22'. Ces points de coupe 22' forment des amorces de rupture qui facilitent la rupture du film 18 le long des lignes 20, par propagation de la rupture plutôt que par allongement du film 18.

Dans l'exemple de réalisation de la figure 2, on procède de la façon suivante :
Lorsque la zone 24 est imprimée, on plie le support d'informations 10 autour de la ligne d'affaiblissement 20 qui s'étend le long du bord horizontal supérieur de la zone 24, le pliage étant réalisé dans la direction de la feuille 16 et non pas dans la direction opposée, de façon à rompre le film 18 d'acétate de cellulose le long de la ligne 20 par allongement.

Grâce aux lignes de coupe 22 et aux points de coupe 22' formés dans la ligne d'affaiblissement 20, le film 18 est rompu par propagation de rupture, de façon plus franche, plus nette et plus rapide que par allongement.

Ensuite, on plie le support 10 dans le même sens le long des lignes 20 qui s'étendent le long des bords latéraux verticaux de la zone 24, pour rompre le film 18 d'acétate de cellulose le long de ces lignes 20, puis on plie le support 10 dans le sens opposé le long des deux lignes 20 qui s'étendent de part et d'autre du bord inférieur 26 de la zone imprimée 24.

On obtient ainsi un présentoir de l'image imprimée, la partie en U du support 10 qui entoure la zone 24 formant un pied d'appui sur une surface horizontale.

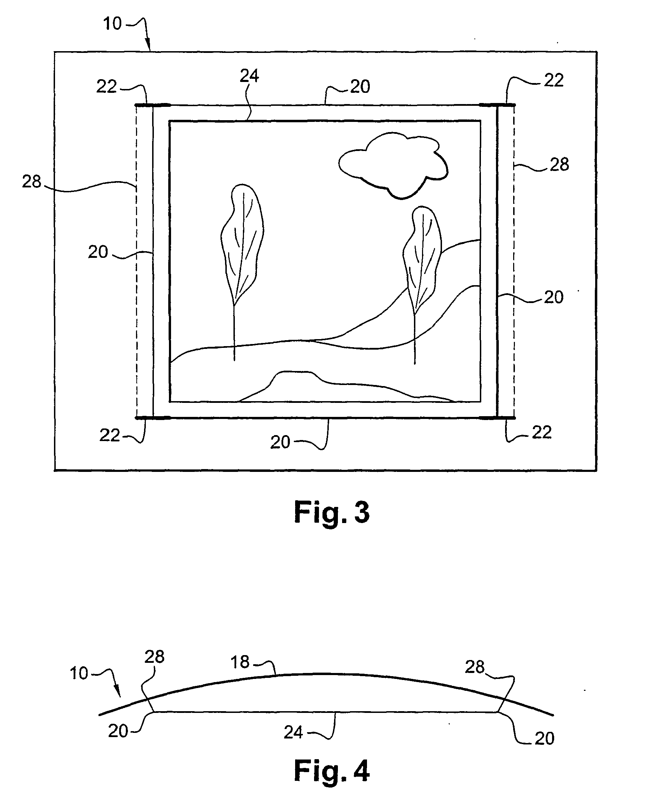

Dans l'exemple de réalisation des figures 3 et 4, le support 10 selon l'invention comprend une zone d'impression 24 qui est délimitée le long de ses côtés horizontaux supérieur et inférieur par deux lignes d'affaiblissement 20 reliées entre elles à leurs extrémités par deux autre lignes d'affaiblissement 20 qui s'étendent le long des bords latéraux verticaux de la zone 24. Deux lignes verticales d'affaiblissement 28 formées de perforations traversant toute l'épaisseur du support 10 sont formées le long des lignes verticales 20 et à l'extérieur de celles-ci. Les lignes horizontales d'affaiblissement 20 se terminent aux extrémités des lignes de perforation 28 et comportent, de préférence, des lignes de coupe 22 à leurs extrémités, ces lignes 22 s'étendant à travers toute l'épaisseur du support 10. En variante, les lignes d'affaiblissement 20 qui s'étendent le long des bords horizontaux supérieur et inférieur de la zone 24, peuvent être formées d'une alternance de lignes d'affaiblissement 20 s'étendant uniquement à travers l'épaisseur du produit laminé 14 et de lignes d'affaiblissement 22 s'étendant également à travers l'épaisseur du film 18 d'acétate de cellulose, ces lignes 20 et 22 étant mises bout à bout.

Lorsque l'impression de la zone 24 a été réalisée, on plie le support 10 le long de chaque ligne horizontale 20 dans la direction de la feuille supérieure 16 de papier photographique pour rompre le film 18 d'acétate de cellulose le long de ces lignes horizontales 20, puis on plie le support 18 dans l'autre sens le long des lignes verticales 20, pour plier le film 18 d'acétate de cellulose le long de ces lignes verticales sans le rompre, et on plie également le support 10 le long des lignes de perforation 28 dans la direction de la feuille supérieure 16 de papier photographique, de façon à obtenir finalement un présentoir dans lequel la partie non imprimée du support 10 forme un cadre autour de la zone 24, ce cadre se trouvant en arrière de cette zone et prenant une forme légèrement incurvée, la zone imprimée 24 restant plane et se trouvant légèrement en avant du reste du support 10 comme représenté schématiquement en figure 4.

On peut, grâce aux lignes d'affaiblissement 20, 22 et aux lignes de perforations 28, former un très grand nombre de présentoirs de types différents.

Les feuilles supérieures 16 de papier photographique peuvent être brillantes, mates ou satinées. Le film 18 d'acétate de cellulose a naturellement un aspect satiné et un excellent toucher. La couche intermédiaire 14 de matériau support, telle en particulier qu'une feuille de papier bristol, a une très bonne tenue et une très bonne main, grâce aux qualités mécaniques du papier bristol qui est plus fortement calendré que les autres papiers.

On peut bien entendu utiliser le support selon l'invention pour l'impression d'images, de photographies, etc. qui restent accrochées au support 10 leur servant de présentoir ou qui en sont complètement séparées par pliage le long de lignes d'affaiblissement formant des lignes de rupture du film 18 d'acétate de cellulose.

II est particulièrement avantageux que les lignes d'affaiblissement 20 qui sont destinées à former des lignes de séparation d'une zone imprimée, comportent de place en place des perforations ou des traits de coupe 22' qui traversent le film 18 d'acétate de cellulose, car ces perforations ou traits de coupe forment des amorces de rupture qui propagent et facilitent la rupture du film 18 lors de son pliage en direction de la feuille supérieure 16 de papier photographique. On obtient ainsi une rupture très franche et très rapide du film 18 le long de ces lignes, qui constituent des bords de coupe parfaitement nets et sans défaut.

Dans une variante de réalisation, la couche ou feuille 16 de matière imprimable ou photosensible ne recouvre qu'une partie seulement de la feuille 14 de papier bristol.

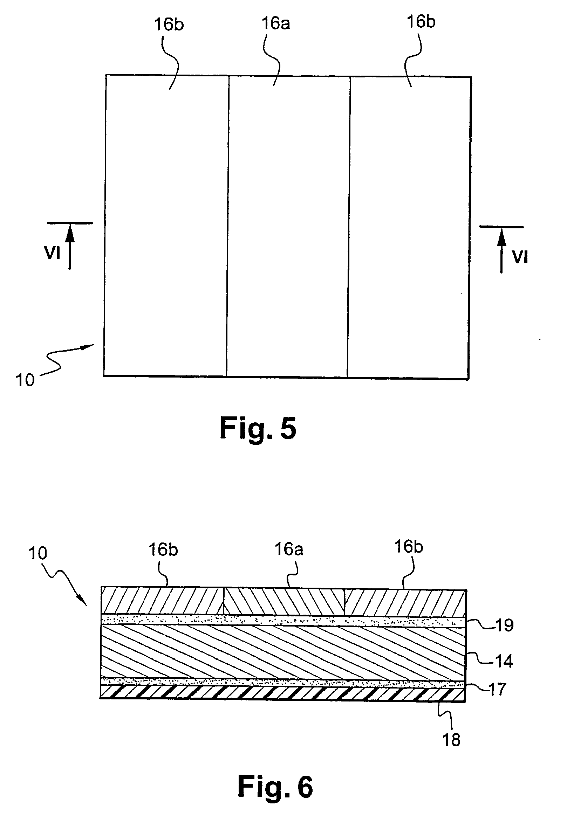

Dans une autre variante de réalisation qui est représentée aux figures 5 et 6, la face supérieure du support selon l'invention comprend au moins deux couches ou feuilles d'aspect différent, telles qu'au moins une feuille 16a de papier photographique brillant et au moins une feuille 16b de papier photographique mat, disposées côte à côte sur la feuille 14 de papier bristol et fixées à celle-ci par une couche mince 19 de colle.

Pour cela, on commence par déposer et fixer sur une partie de la feuille 14 de papier bristol la ou les feuilles 16a de papier brillant (ou mat, l'ordre n'important pas) puis on dépose et on fixe sur le reste de la feuille 14 la ou les feuilles 16b de papier mat (ou brillant; inversement).

Les deux feuilles 16a, 16b de papier photographique ont des aspects différents, donnant un caractère particulier au support selon l'invention après impression. Les dispositions relatives de ces feuilles d'aspect différent peuvent être très diverses, selon l'aspect d'ensemble qui est recherché. Elles peuvent couvrir ou non toute la surface de la feuille 14 de papier bristol.

## Revendications

1. Support d'informations en feuille du type imprimable, comprenant une couche mince inférieure (18) d'acétate de cellulose appliquée sur une face d'un produit laminé (12) comprenant au moins une feuille (14) de papier bristol et une feuille supérieure (16) de papier photographique utilisable sur imprimante laser ou à jet d'encre, et des lignes d'affaiblissement (20) formées au moins dans toute l'épaisseur du produit laminé (12).

2. Support selon la revendication 1, **caractérisé en ce que** la feuille (14) de papier bristol a un grammage compris entre 90 et 250 grammes par mètre carré.

3. Support selon la revendication 1 ou 2, **caractérisé en ce que** la feuille supérieure (16) de papier photographique a un grammage compris entre 85 et 110 grammes par mètre carré.

4. Support selon l'une des revendications précédentes, **caractérisé en ce que** la couche inférieure (18) est un film d'acétate de cellulose.

5. Support selon la revendication 4, **caractérisé en ce que** le film (18) d'acétate de cellulose a une épaisseur comprise entre 15 et 50µm environ, en particulier de 30µm.

6. Support selon la revendication 4 ou 5, **caractérisé en ce que** le film (18) d'acétate de cellulose est collé sur la feuille (14) de papier bristol, par exemple au moyen d'une colle thermofusible.

7. Support selon l'une des revendications précédentes, **caractérisé en ce que** la couche supérieure (16) de papier photographique est collée sur la feuille (14) de papier bristol, par exemple au moyen d'une colle thermofusible.

8. Support selon l'une des revendications précédentes, **caractérisé en ce que** les lignes d'affaiblissement comprennent des lignes de coupe (20) formées uniquement à travers le produit laminé (12) et des lignes de coupe (22) formées à travers le produit laminé (12) et la couche inférieure (18).

9. Support selon l'une des revendications précédentes, **caractérisé en ce que** certaines des lignes d'affaiblissement (20) comprennent de place en place des traits de coupe (22') traversant la couche inférieure (18) et formant des amorces de rupture de cette couche.

10. Support selon l'une des revendications précédentes, **caractérisé en ce que** les lignes d'affaiblissement comprennent des lignes (28) formées de perforations successives s'étendant à travers la couche supérieure (16), la feuille (14) de papier bristol et la couche inférieure (18) et constituant des lignes de pliage ou de rupture.

11. Support selon l'une des revendications précédentes, **caractérisé en ce que** les lignes d'affaiblissement (20, 22, 28) délimitent au moins une zone (24) destinée à recevoir une information et/ou une image imprimée et comprennent des lignes de coupe permettant de séparer cette zone du reste du support (10) et/ou des lignes de pliage ou de rupture rattachant cette zone à d'autres parties du support qui, après pliage le long de ces lignes, forment un présentoir de ladite zone (24).

12. Support selon l'une des revendications précédentes, **caractérisé en ce que** la couche supérieure (16) de papier photographique recouvre une partie seulement de la feuille (14) de papier bristol.

13. Support selon l'une des revendications précédentes, **caractérisé en ce qu'**au moins deux feuilles (16a, 16b) de papier photographique d'aspect différent, par exemple brillant et mat respectivement, sont disposées et fixées côte à côte sur la feuille (14) de papier bristol.

## Claims

1. Information support sheet of the printable type, comprising a lower thin layer (18) of cellulose acetate applied on a face of a laminated product (12) comprising at least one sheet (14) of Bristol paper and an upper sheet (16) of photographic paper that can be used in a laser or ink-jet printer, and weakening lines (20) formed at least in all of the thickness of the laminated product (12).

2. Support according to claim 1, **characterised in that** the sheet (14) of Bristol paper has a paper weight between 90 and 250 grams per square metre.

3. Support according to claim 1 or 2, **characterised in that** the upper sheet (16) of photographic paper has a paper weight between 85 and 110 grams per square metre.

4. Support according to one of the preceding claims, **characterised in that** the lower layer (18) is a film of cellulose acetate.

5. Support according to claim 4, **characterised in that** the film (18) of cellulose acetate has a thickness between 15 and 50µm environ, in particular 30µm.

6. Support according to claim 4 or 5, **characterised in that** the film (18) of cellulose acetate is glued on the sheet (14) of Bristol paper, for example by means of a hot melt adhesive.

7. Support according to one of the preceding claims, **characterised in that** the upper layer (16) of photographic paper is glued on the sheet (14) of Bristol paper, for example by means of a hot melt adhesive.

8. Support according to one of the preceding claims, **characterised in that** the weakening lines include cutting lines (20) formed solely through the laminated product (12) and cutting lines (22) formed through the laminated product (12) and the lower layer (18).

9. Support according to one of the preceding claims, **characterised in that** some of the weakening lines (20) include from place to place cutting marks (22') passing through the lower layer (18) and forming initial sections for breakage of this layer.

10. Support according to one of the preceding claims, **characterised in that** the weakening lines include lines (28) formed of successive perforations which extend through the upper layer (16), the sheet (14) of Bristol paper and the lower layer (18) and comprising folding or breakage lines.

11. Support according to one of the preceding claims, **characterised in that** the weakening lines (20, 22, 28) delimit at least one zone (24) intended to receive information and/or a printed image and include cutting lines making it possible to separate this zone from the rest of the support (10) and/or folding or breakage lines connecting this zone to other portions of the support which, after folding along these lines, form a display of said zone (24).

12. Support according to one of the preceding claims, **characterised in that** the upper layer (16) of photographic paper covers only a portion of the sheet (14) of Bristol paper.

13. Support according to one of the preceding claims, **characterised in that** at least two sheets (16a, 16b) of photographic paper of a different aspect, for example glossy and mat respectively, are arranged and fixed side by side on the sheet (14) of Bristol paper.

## Patentansprüche

1. Informationsträger des bedruckbaren Typs in bogenform, umfassend eine dünne untere Schicht (18) aus Celluloseacetat, die auf einer Seite eines laminierten Produktes (12) aufgebracht ist, das mindestens einen Bogen (14) aus Bristolpapier und einen oberen Bogen (16) aus Fotopapier, das auf einem Laser- oder Tintenstrahldrucker verwendbar ist, umfasst, und Schwächungslinien (20), die wenigstens in der gesamten Dicke des laminierten Produktes (12) ausgebildet sind.

2. Träger gemäss Anspruch 1, **dadurch gekennzeichnet, dass** der Bogen (14) aus Bristolpapier ein Flächengewicht hat, das zwischen 90 und 250 Gramm pro Quadratmeter liegt.

3. Träger gemäss Anspruch 1 oder 2, **dadurch gekennzeichnet, dass** der obere Bogen (16) aus Fotopapier ein Flächengewicht hat, das zwischen 85 und 110 Gramm pro Quadratmeter liegt.

4. Träger gemäss einem der vorangehenden Ansprüche, **dadurch gekennzeichnet, dass** die untere Schicht (18) ein Celluloseacetatfilm ist.

5. Träger gemäss Anspruch 4, **dadurch gekennzeichnet, dass** der Celluloseacetatfilm (18) eine Dicke hat, die ungefähr zwischen 15 und 50µm, insbesondere bei 30 µm liegt.

6. Träger gemäss Anspruch 4 oder 5, **dadurch gekennzeichnet, dass** der Celluloseacetatfilm (18) auf den Bogen (14) aus Bristolpapier geklebt ist, beispielsweise mittels eines Schmelzklebstoffes.

7. Träger gemäss einem der vorangehenden Ansprüche, **dadurch gekennzeichnet, dass** die obere Schicht (16) aus Fotopapier auf den Bogen (14) aus Bristolpapier geklebt ist, beispielsweise mittels eines Schmelzklebstoffes.

8. Träger gemäss einem der vorangehenden Ansprüche, **dadurch gekennzeichnet, dass** die Schwächungslinien Schnittlinien (20) umfassen, die nur durch das laminierte Produkt (12) ausgebildet sind, und Schnittlinien (22), die durch das laminierte Produkt (12) und die untere Schicht (18) ausgebildet sind.

9. Träger gemäss einem der vorangehenden Ansprüche, **dadurch gekennzeichnet, dass** einige der Schwächungslinien (20) von Stelle zu Stelle Schnittlinien (22') umfassen, die die untere Schicht (18) durchqueren und Bruchansatzstellen dieser Schicht bilden.

10. Träger gemäss einem der vorangehenden Ansprüche, **dadurch gekennzeichnet, dass** die Schwächungslinien (20) Linien (28) aufweisen, die aus aufeinanderfolgenden Perforationen, die sich durch die obere Schicht (16), den Bogen (14) aus Bristolpapier und die untere Schicht (18) erstrecken und die Falt- oder Bruchlinien bilden, gebildet sind.

11. Träger gemäss einem der vorangehenden Ansprüche, **dadurch gekennzeichnet, dass** die Schwächungslinien (20, 22, 28) zumindest einen Bereich (24) abgrenzen, der den Zweck hat, eine Information und/oder ein gedrucktes Bild aufzunehmen, und Schnittlinien, die es erlauben, diesen Bereich vom Rest des Trägers zu trennen, und/oder Falt- oder Bruchlinien, die diesen Bereich mit anderen Teilen des Trägers verbinden, die nach dem Falten entlang dieser Linien ein Präsentiermittel des besagten Bereichs (24) ausbilden, umfassen.

12. Träger gemäss einem der vorangehenden Ansprüche, **dadurch gekennzeichnet, dass** die obere Schicht (16) aus Fotopapier nur einen Teil des Bogens (14) aus Bristolpapier abdeckt.

13. Träger gemäss einem der vorangehenden Ansprüche, **dadurch gekennzeichnet, dass** mindestens zwei Bogen (16a, 16b) aus Fotopapier mit unterschiedlichem Aspekt, zum Beispiel jeweils matt und glänzend, nebeneinander auf dem Bogen (14) aus Bristolpapier angebracht und befestigt sind.
